Europäisches Patentamt

European Patent Office

Office européen des brevets

Veröffentlichungsnummer: **0 276 773**

**A1**

# EUROPÄISCHE PATENTANMELDUNG

Anmeldenummer: **88100900.5**

Anmeldetag: **22.01.88**

Int. Cl.4: **F02B 27/02**

Priorität: **30.01.87 DE 3702827**

Veröffentlichungstag der Anmeldung:
**03.08.88 Patentblatt 88/31**

Benannte Vertragsstaaten:
**DE FR GB IT SE**

Anmelder: **BAYERISCHE MOTOREN WERKE
Aktiengesellschaft
Postfach 40 02 40 Petuelring 130 - AJ-30
D-8000 München 40(DE)**

Erfinder: **Ruffing, Wolfgang
St. Benedikt Strasse 1
D-8044 Lohhof(DE)**
Erfinder: **Oehling, Karl-Heinz
Schinkelstrasse 17
D-8000 München 40(DE)**

Vertreter: **Bücken, Helmut
Bayerische Motoren Werke
Aktiengesellschaft Postfach 40 02 40
Petuelring 130 - AJ-30
D-8000 München 40(DE)**

**Ansauganlage mit einer Steuervorrichtung, insbesondere für Brennkraftmaschinen.**

Bei einer Ansauganlage mit einer Steuervorrichtung für eine Brennkraftmaschine sind jedem Zylinder zwei Ansaugleitungen (6, 7) zugeordnet, wobei eine (6) der Ansaugleitungen eine Ausnehmung (9) am Umfang zur Einmündung der anderen Ansaugleitung (7) aufweist. In der die Mündung aufweisenden Ansaugleitung ist für die Zu-und Abschaltung der anderen Ansaugleitung ein drehbewegliches Verschlußorgan in Gestalt einer Drehhülse (10) mit einer im Hülsenmantel angeordneten Durchbrechung (11) als Steueröffnung der Mündung vorgesehen, wobei die drehhülse aus der sie aufnehmenden und über ein Laststeuerorgan gesteuerten Ansaugleitung längsdurchströmt ist.

Fig.1

## Ansauganlage mit einer Steuervorrichtung, insbesondere für Brennkraftmaschinen

Die Erfindung geht gemäß dem Oberbegriff des Patentanspruches 1 von der DE-OS 35 21 747 aus.

Bei dieser bekannten Bauart ist in der einen Ansaugleitung stromauf der Mündung der anderen Ansaugleitung eine Drosselklappe als Verschlußorgan angeordnet. Um die in die eine Ansaugleitung aus der anderen Ansaugleitung einströmende Luft durch eine voll geöffnete Drosselklappe nicht zu stören, ist diese Drosselklappe in einem vorbestimmten Abstand von der Mündung in der einen Ansaugleitung anzuordnen. Damit ist bei geschlossener Drosselklappe zwischen dieser und der Mündung der anderen Ansaugleitung ein Totvolumen gegeben, das zu starker Wirbelbildung und damit hohen Strömungsverlusten führt. Wird ferner das Laststeuerorgan in einer stromauf der beiden Ansaugleitungen vorgesehenen Luftführung angeordnet, muß zur Erzielung eines niedertourigen, einwandfreien Leerlaufs der Brennkraftmaschine eine in der Verschlußstellung befindliche Drosselklappe besonders dicht sein. Zur Vermeidung von den Leerlauf störenden Falschluftmengen ist die Drosselklappe über ihren Außenumfang in die Ansaugleitung einzupassen. Weiter sind bei einer die Wandung der Ansaugleitung durchsetzenden Drosselklappenwelle die Lagerungen besonders dicht zu gestalten. Damit ergibt sich bei einer mehrzylindrigen Brennkraftmaschine mit jedem Zylinder zugeordneten Paaren von Ansaugleitungen ein erheblicher Aufwand zur ausreichenden Abdichtung bei allen als Verschlußorgange dienenden Drosselklappen. Schließlich stellen diese Drosselklappen in jedem Fall bei geöffneter Stellung einen erheblichen Strömungswiderstand dar.

Der Erfindung liegt die Aufgabe zugrunde, für eine gattungsgemäße Ansauganlage ein Verschlußorgan vorzuschlagen, das weder durch seine Gestaltung noch durch seine Anordnung in der Ansaugleitung die Luftströmung stört. Weiter soll das Verschlußorgan so beschaffen sein, daß die Anzahl abzudichtender Stellen zwischen der Luftführung in der Ansauganlage (Unterdruck) und der Umgebung (Umgebungsdruck) möglichst gering ist. Schließlich soll der bauliche Aufwand für die Betätigungsanordnung des steuerbaren Verschlußorgans bzw. der steuerbaren Verschlußorgans in paarweise den Zylindern einer mehrzylindrigen Brennkraftmaschine zugeordneten Ansaugleitungen im Hinblick auf eine geringstmögliche Anzahl abzudichtender Stellen zwischen der Unterdruckseite in der Ansauganlage und dem Umgebungsdruck gering sein.

Für eine grundsätzliche Lösung der Aufgabe werden die im Kennzeichen des Hauptanspruches angegebenen Merkmale vorgeschlagen. Mit diesen Merkmalen sind vorteilhafte Voraussetzungen im Hinblick auf eine geringstmögliche Anzahl abzudichtender Stellen bei einfachem Aufbau der Betätigungsanordnung gegeben wie, dies in den folgenden Ansprüchen 2 mit 6 näher beschrieben ist. Die weiteren Ansprüche 7 mit 12 beschreiben die vorteilhafte Kombination der erfindungsgemäß als Verschlußorgan dienenden Drehhülse mit einer erfindungsgemäß als Laststeuerorgan dienenden Steuerhülse, wobei die Merkmale der Ansprüche 7 mit 9 im Hinblick auf einfache Ausgestaltung der Betätigungsanordnung und der Luftströmung vorteilhafte konstruktive Ausgestaltungen für die Kombination der beiden Organe beschreiben. Die Merkmale der Ansprüche 10 mit 12 beschreiben funktionelle Beziehungen der miteinander kombinierten Organe, um bei einfachem Gesamtaufbau der Ansauganlage eine in einem weiteren Drehzahlbereich der Brennkraftmaschine durch dynamische Vorgänge unterstützte Luftzuführung zu erzielen. Eine im Hinblick auf dynamische Vorgänge der älteren Anmeldung P 35 44 122.4 optimierte Ansauganlage ist schließlich nach An spruch 15 zumindest mit den erfindungsgemäß als Verschlußorgane dienenden Drehhülsen ausgerüstet.

Mit der Erfindung eines als rohrförmige Hülse von geringer Wandstärke gestalteten Verschlußorgans bereitet dieses durch die Möglichkeit der Lagerung über den Außenumfang keine Schwierigkeit bei der Integration in einer Ansauganlage und ergibt durch die entsprechende Anpassung an die Luftführung in der Ansaugleitung eine verlustfreie Strömung. Weiter bietet die drehbewegliche Lagerung des erfindungsgemäßen Verschlußorgans über den Außenumfang den weiteren Vorteil, zur Steuerung des Verschlußorgans erforderliche Betätigungsmittel außerhalb der Luftführung am Außenumfang des Verschlußorgans anzuordnen, wobei diese und weitere Mittel der Betätigungseinrichtung in einer mit der Luftführung verbundenen, nach außen jedoch statisch abgedichteten Kammer anordbar sind. Bei einer Ansauganlage mit mehreren erfindungsgemäßen Verschlußorganen sind diese gemeinsam betätigbar. wobei lediglich eine abzudichtende Stelle für eine Antriebswelle dynamisch abzudichten ist.

Die Erfindung ist anhand von in der Zeichnung dargestellten Ausführungsbeispielen beschrieben. Es zeigt:

Fig. 1 ein schematischer Darstellung eine für eine Mehrzylinder-Brennkraftmaschine vorgesehene Ansauganlage mit einer Steuervorrichtung, wobei in dem mit einem Resonanzsystem kombinierten Schwingrohrsystem Drehhülsen als Verschlußorgane angeordnet sind,

Fig. 2 eine konstruktive Ausgestaltung von zwei an einem Saugstutzen angeschlossenen Ansaugleitungen mit in einer Ansaugleitung angeordneter Drehhülse zur Steuerung der anderen Ansaugleitung,

Fig. 3 die Drehhülse nach Fig. 2 in Offenstellung für die andere Ansaugleitung,

Fig. 4 eine Betätigungseinrichtung zur gemeinsamen Betätigung mehrerer Drehhülsen gemäß dem Schnitt IV-IV in Fig. 2,

Fig. 5 ein weiteres Ausführungsbeispiel einer Ansauganlage, bei der die als Verschlußorgan dienende Drehhülse mit einer als Laststeuerorgan dienenden Steuerhülse der Ansaugleitung kombiniert ist,

Fig. 6 die Ansauganlage nach Fig. 5, in der beide Ansaugleitungen offen gesteuert sind,

Fig. 7 eine Abwandlung der Ansauganlage nach Fig. 5, wobei die Drehhülse über eine angetriebene Steuerhülse betätigt ist,

Fig. 8 zeigt schließlich eine Ansauganlage nach Fig. 2 mit einem im Saugstutzen als Drosselklappe angeordneten Laststeuerorgan.

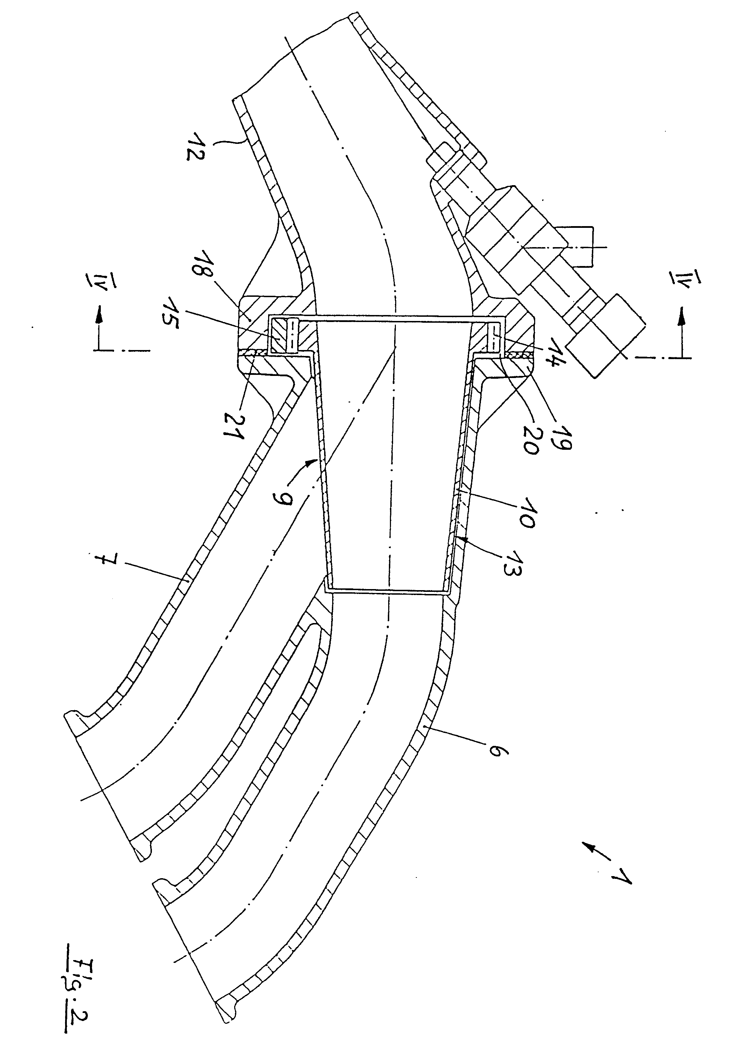

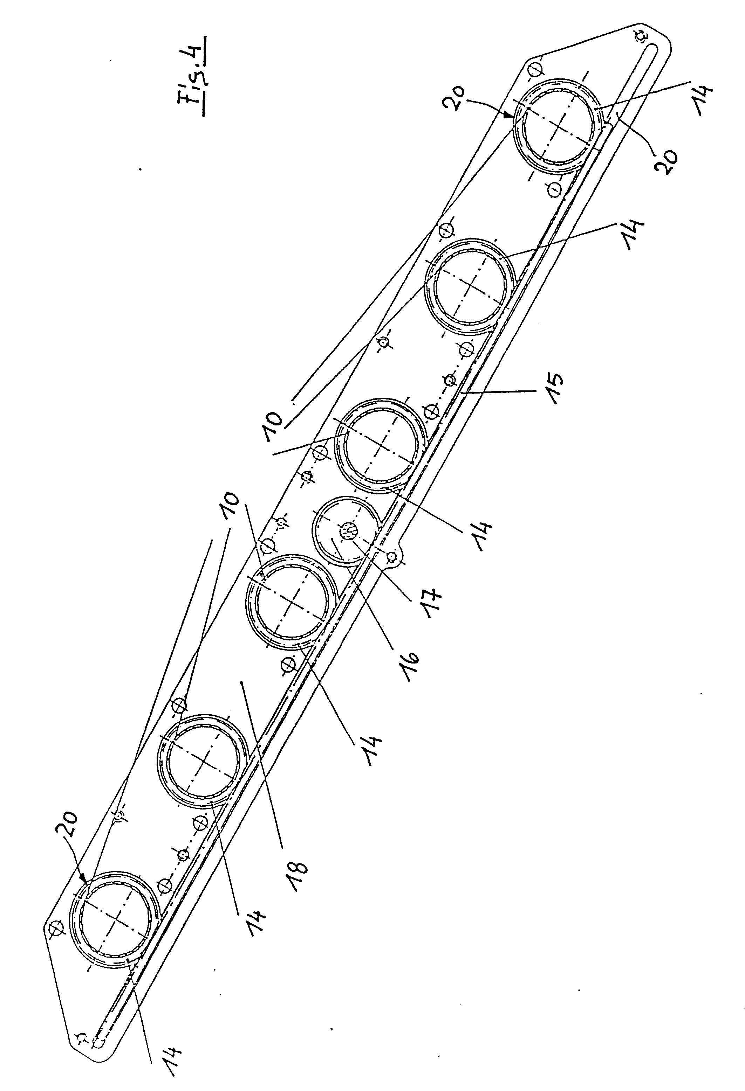

Eine Ansauganlage 1 für eine 6-Zylinder-Reihen-Brennkraftmaschine 2 ist aus einem Schwingrohr-System 3 und einem Resonanzsystem 4 gebildet. Jedem Brennraum 5 der Brennkraftmaschine 2 sind jeweils zwei Schwingrohre 6 und 7 zugeordnet. An ihrem motorabgewandtem Ende stehen die Schwingrohre 6 und 7 jeweils mit einem Sammler 8 in Verbindung. Der Schwingrohre 6 und 7 können von unterschiedlichem Durchmesser sein und verschiedene Längen aufweisen. Motorseitig münden die Schwingrohre 7 über eine Ausnehmung 9 am Umfang der Schwingrohre 6 in diese ein. Eine Drehhülse 10 mit einer im Hülsenmantel angeordneten Druchbrechung als Steueröffnung 11 ist in dem Schwingrohr 6 im Bereich der Mündung 9 des Schwingrohres 7 als drehbewegliches Verschlußorgan angeordnet, wobei die Drehhülse 10 aus dem Schwingrohr 6 längsdurchströmt ist. Wie aus dem in Fig. 2 näher gezeigten Anschluß der Schwingrohre 6 und 7 an einem mit dem Zylinder 5 in Verbindung stehenden Saugstutzen 12 hervorgeht, ist das mit der Drehhülse 10 ausgerüstete Schwingrohr 6 im stutzenseitigen Endbereich sich konisch erweiternd ausgebildet zur Aufnahme einer konisch gestalteten und über den Außenumfang 13 gleitbeweglich gelagerten Drehhülse 10. Jede Drehhülse 10 weist ferner am Außenumfang am stutzenseitigen und im Durchmesser größeren Endbereich einen Zahnkranz 14 auf, der mit einer Zahnstange 15 einer abhängig steuerbaren Betätigungseinrichtung in Antriebsverbindung steht. Wie aus Fig. 4 ersichtlich, stehen alle Steuerhülsen 10 der Ansauganlage 1 über ihren jeweiligen Zahnkranz 14 mit einer einzigen Zahnstange 15 zur gemeinsamen Steuerung in Antriebsverbindung. Hierfür sind auch ein Seil-, Ketten-oder Schneckengetriebe denkbar. Die Zahnstange 15 wird von einem nicht dargestellten Steuermotor über ein Antriebsrad 16 angetrieben. Das Antriebsrad 16 steht mit dem nicht dargestellten Steuermotor über eine Antriebswelle 17 in Verbindung, die einen für alle Saugstutzen 12 der Ansauganlage 1 gemeinsamen Flansch 18 unter Zwischenschaltung einer Wellendichtung durchsetzt.

Der Flansch 18 begrenzt mit einem für alle Schwingrohr-Paare 6,7 gemeinsamen Flansch 19 eine Kammer 20, die gegen die Umgebung über eine zwischen die Flansche 18 und 19 eingebrachte Dichtung 21 abgedichtet ist. Die somit dem jeweiligen Ansaugdruck der Brennkraftmaschine 2 ausgesetzte Kammer 20 bzw. Kammern 20 nimmt sowohl die Zahnkränze 14 der Steuerhülsen 10 als auch die Zahnstange 15 und das Antriebsrad 16 der Betätigungseinrichtung auf. Damit stellt die den Flansch 18 durchsetzende Antriebswelle 17 lediglich die einzige abzudichtende Stelle der Steuervorrichtung aller Drehhülsen 10 dar.

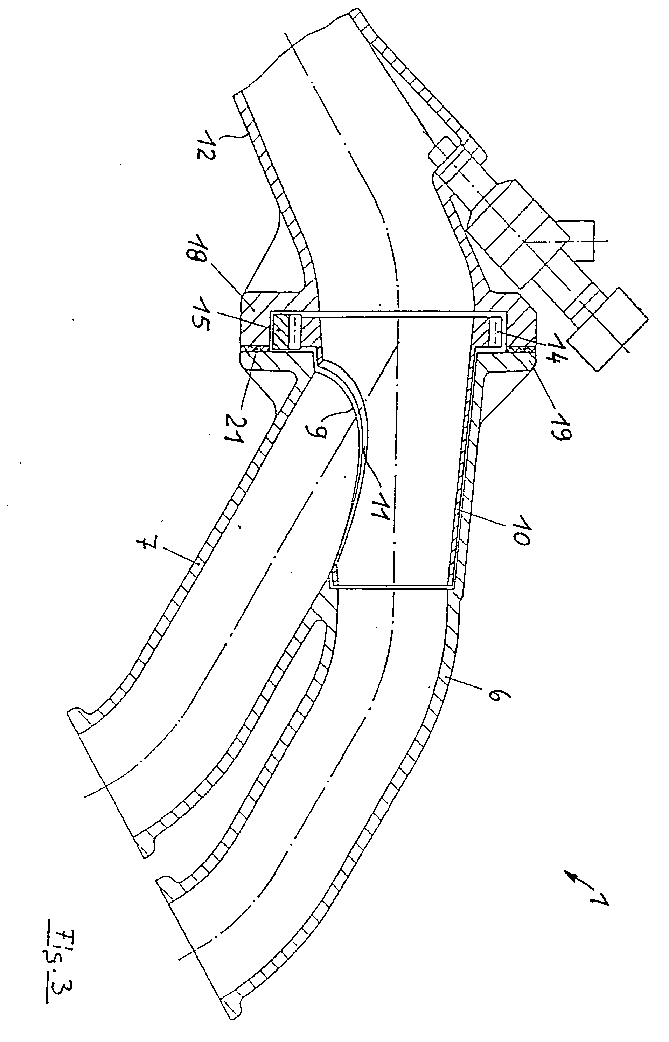

In Fig. 3 ist das Schwingrohr 7 über die Steueröffnung 11 der Drehhülse 10 maximal aufgesteuert. Mit der zum Saugstutzen 12 hin sich konisch erweiternden Drehhülse 10 ist eine Querschnittsvergrößerung für einen aus beiden Schwingrohren 6 und 7 erreichten Luftdurchsatz gegeben.

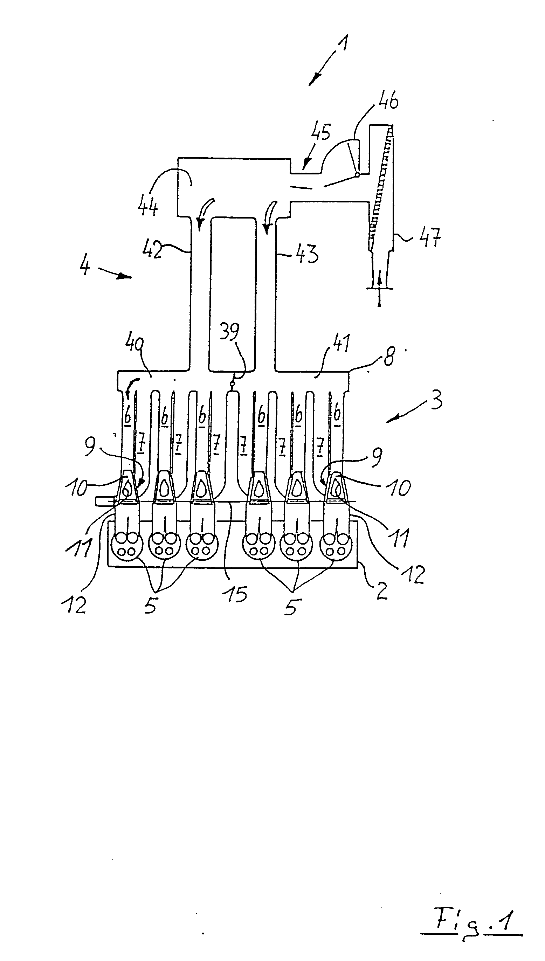

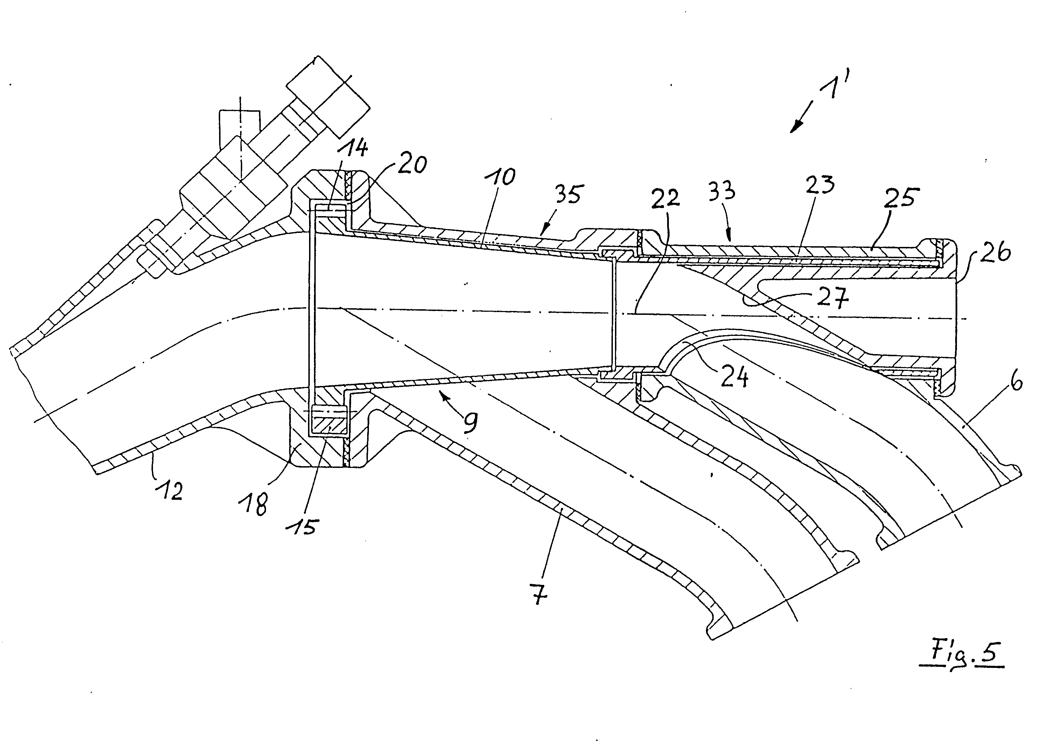

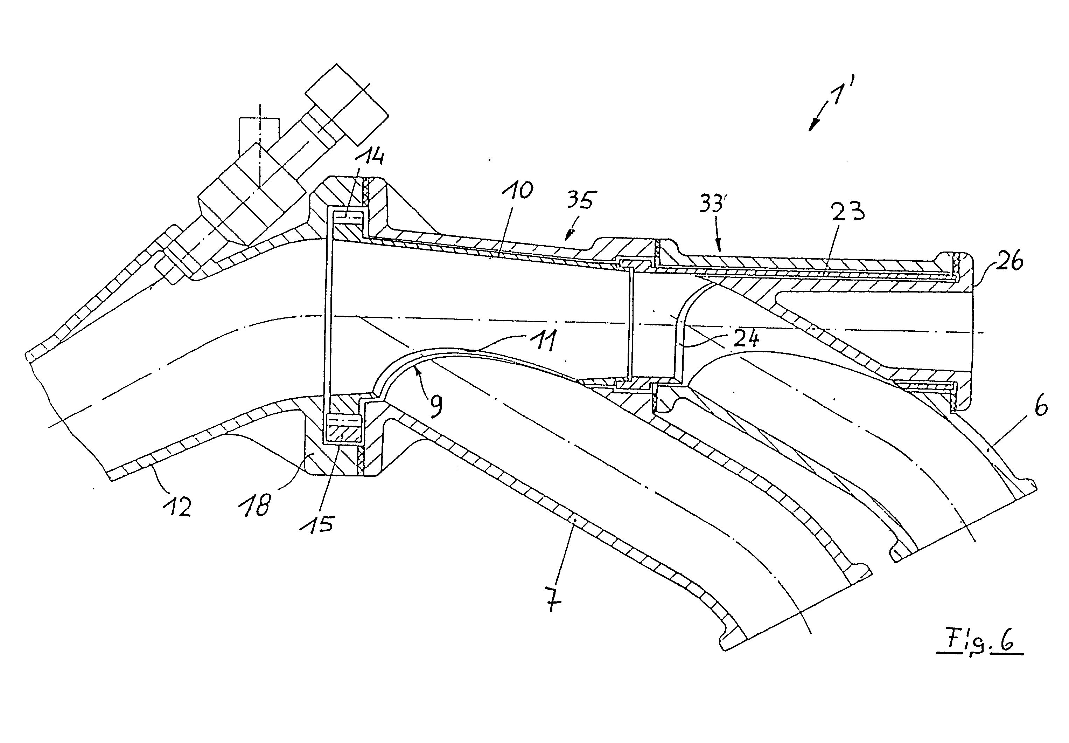

Bei der in Fig. 5 teilweise dargestellten Ansauganlage 1' sind dieselben Bauelemente mit den gleichen Bezugsziffern belegt. Diese Ansauganlage 1' weicht von der Ansauganlage 1 der Fig. 1 - 3 dadurch ab, daß das Schwingrohr 6 stromauf der Drehhülse 10 mittels einer um die verlängerte Drehhülse-Achse 22 drehbeweglich angeordneten Steuerhülse 23 zur Laststeuerung steuerbar ist, wobei eine im Steuerhülsenmantel angeordnete Durchbrechung als Steueröffnung 24 dient, die in Umfangsrichtung um das Umfangsmaß der Steueröffnung 11 der Drehhülse 10 vergrößert ist. Zur Anordnung der Steuerhülse 23 ist Schwingrohr quer zur verlängerten Drehhülsen-Achse 22 gerichtet und weist eine zur Drehhülsen-Achse 22 koaxial angeordnete Aufnahme 24 für die Steuerhülse 23 auf. Am freien Ende der Aufnahme 25 ist ein in die Steuerhülse 23 ragender Verschlußpfropfen 26 angeordnet, der eine der Fortsetzung der Innenkontur des Schwingrohres 6 dienende Begrenzung 27 aufweist. Damit ist ein durch Wirbelbildung für die Strömung schädlicher Totraum in der Steuerhülse 23 vermieden. Der für eine willkürliche Laststeuerung erforderliche Antrieb der Steuerhülse 23 erfolgt über die Drehhülse 10, mit der die Steuerhülse 23 in drehfester Verbindung steht. Damit sind die Drehhülse 10 und die Steuerhülse 23 miteinander starr gekoppelt, so daß das Schwingrohr 7 im wesentlichen erst nach vollständiger Aufsteuerung des Schwingrohres 6 über die Steuerhülse 23 zugeschaltet werden kann. In Fig. 6 ist für die Ansauganlage 1' die vollständige Aufsteuerung der Schwingrohre 6 und 7 über Steueröffnungen 24 und 11 der Steuerhülse 23 und der Drehhülse 10 dargestellt.

Für die Optimierung der Ansauganlage 1' in ihrem Resonanzverhalten kann es vorteilhaft sein, die Steuerhülse 23 von der Drehhülse 10 gesondert anzutreiben. Damit können zumindest zur Erzielung einer Resonanz-Vielfachen beide Schwingrohre 6 und 7 entsprechend aufgesteuert werden.

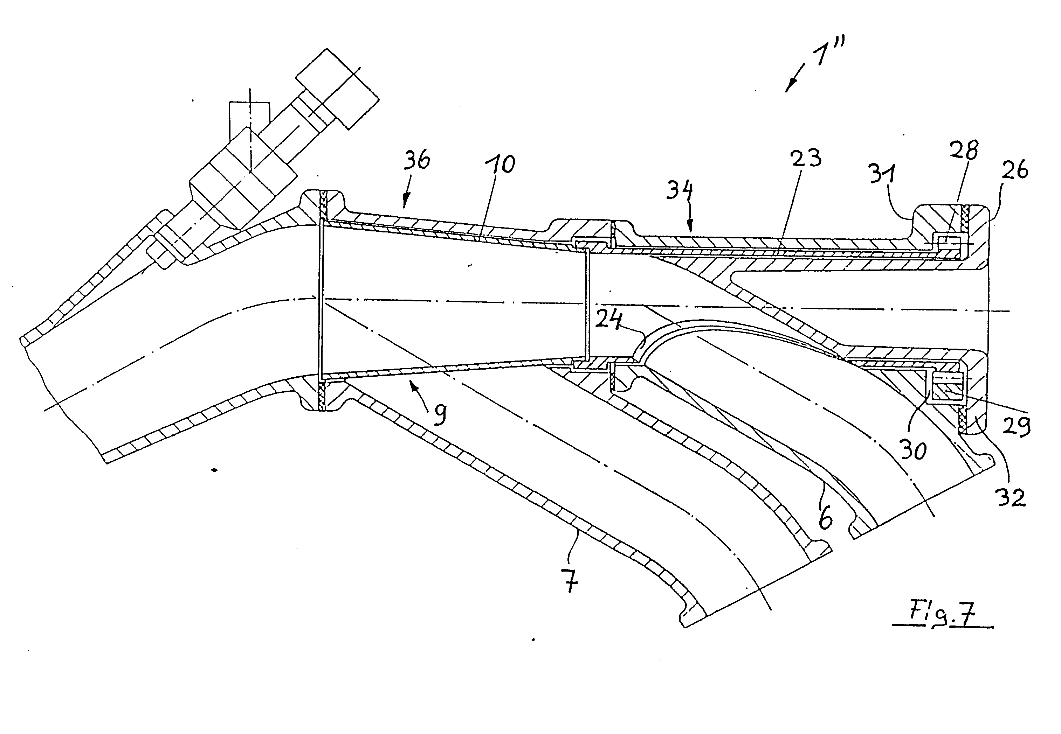

Bei einer Ausgestaltung einer angetriebenen Steuerhülse 23 einer Ansauganlage 1″ nach Fig. 7 kann diese zylindrisch ausgebildet und einen dem kleinen Durchmesser der konischen Drehhülse 10 angepaßten Durchmesser aufweisen. Die Steuerhülse 23 ist dabei an ihrem dem Verschlußpfropfen 26 zugewandtem Ende über einen Zahnkranz 28 in Antriebsverbindung mit einer Zahnstange 29, die über ein Antriebsrad eines Steuermotors betätigt ist (nicht dargestellt). Weiter sind der Zahnkranz 28, die Zahnstange 29 sowie das nicht dargestellte Antriebsrad des Steuermotors in einer mit den Schwingrohren 6 und 7 luftführend verbundenen Kammer 30 bzw. Kammern 30 angeordnet, die von einem für alle Aufnahmen 25 gemeinsamen Flansch 31 und einer für alle Verschlußpfropfen 26 gemeinsamen Verschlußplatte 32 begrenzt ist. Wie aus Fig. 7 weiter hervorgeht, ist die Drehhülse 10 zum Antrieb über die Steuerhülse 23 mit dieser drehfest verbunden und somit wiederum starr gekoppelt.

Bei den Ansauganlagen 1' und 1″ kann das jeweilige Schwingrohr 6 mit der Aufnahme 25 für die Steuerhülse 23 ein gesondertes Teil 33 bzw. 34 bilden, das mit dem die Drehhülse 10 zur Steuerung des Schwingrohres 7 aufnehmenden Teil 35 bzw. 36 verbindbar ist. Diese konstruktiven Aufteilung kann für die gießtechnische Herstellung und oder die mechanische Bearbeitung von Vorteil sein.

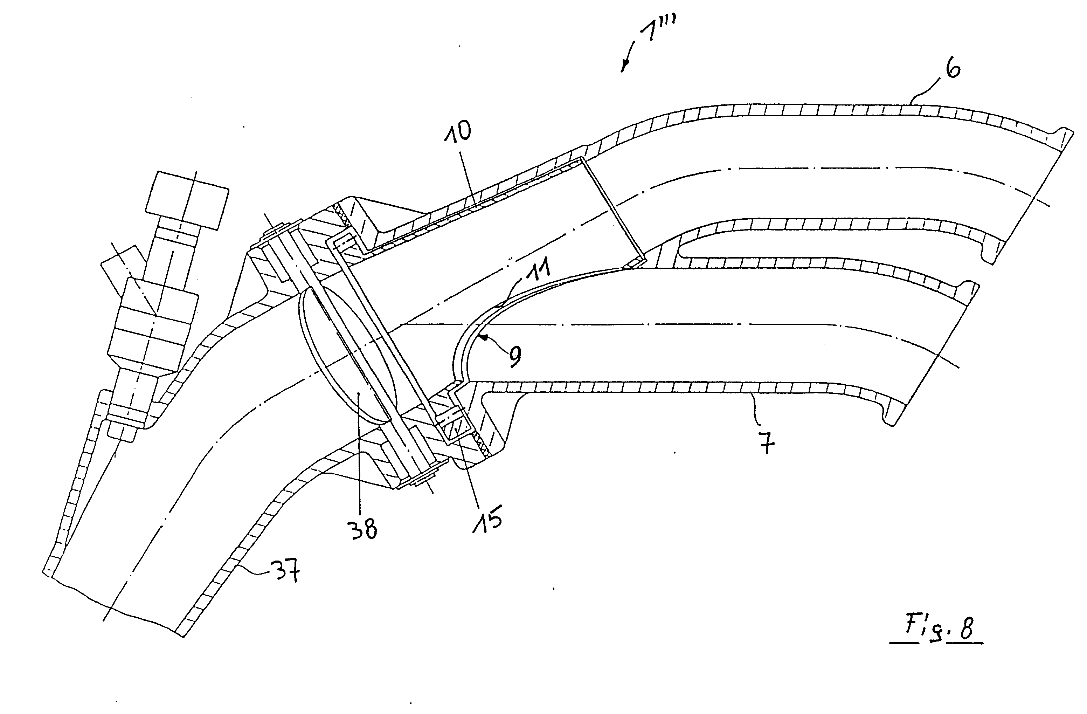

Schließlich zeigt Fig. 8 eine Ansauganlage 1‴ mit einem stromab der Drehhülse 10 angeordneten Saugstutzen 37, der eine Drosselklappe 38 als willkürlich betätigbares Laststeuerorgan aufweist.

Abschließend sei noch angemerkt, daß der eingangs der Zeichnungsbeschreibung erwähnte Sammler 8 der Fig. 1 durch ein Absperrorgan 39 in zwei volumengleiche Resonanzbehälter 40 und 41 unterteilbar ist. Die zwei Resonanzbehälter 40 und 41 stehen über die Schwingrohre 6 und 7 jeweils mit drei Brennräumen 5 der Brennkraftmaschine 2 in Verbindung, wobei in jeder Gruppe der drei Brennräume 5 jeweils eine Saugfolge von 240°KW gegeben ist. An den Sammler 8 sind Rohre 42 und 43 angeschlossen. die bei Unter teilung des Sammlers 8 in die Resonanzbehälter 40 und 41 als Resonanzrohre dienen. Die Resonanzrohre 42 und 43 wirken mit einem Ausgleichsbehälter 44 zusammen, der mi einem willkürlich gesteuerten Lufteinlaß 45 ausgerüstet sein kann. Stromauf des Lufteinlasses 45 ist ein Luftmengenmesser 46 sowie ein Ansauggeräuschdämpfer 47 angeordnet. Das Sammler-Absperrorgan 39 und die Drehhülsen 10 in den Schwingrohren 6 werden relativ zu einem willkürlich betätigbaren Laststeuerorgan (Lufteinlaß 45; Drosselklappe 38 in Saugstutzen 37) betriebspunktabhängig gleichsinnig oder wechselweise gegensinnig gesteuert, derart, daß für den unteren Drehzahlbereich der Mehrzylinder-Brennkraftmaschine 2 eine Resonanzaufladung mit hohen Luftaufwandswerten und im mittleren und oberen Drehzahlbereich eine Schwingrohraufladung mit ebenfalls hohen Luftaufwandwerten nahe "1" erzielt wird. Dieses Zeil wird durch die nahezu keinen Strömungswiderstand aufweisenden Drehhülsen 10 zusätzlich unterstützt.

**Ansprüche**

1. Ansauganlage mit einer Steuervorrichtung insbesondere für Brennkraftmaschinen,
- die maschinen-bzw. verbraucherseitig einen Saugstutzen (12,37) mit stromauf angeordneten Ansaugleitungen (Schwingrohre 6,7) mit ggf. unterschiedlichen geometrischen Abmessungen aufweist und
- eine der Ansaugleitungen (Schwingrohr 6) eine Ausnehmung (9) am Umfang zur Einmündung der anderen Ansaugleitung (Schwingrohr 7) aufweist, und
- wobei ein willkürlich betätigbares Laststeuerorgan sowie in einer der Ansaugleitungen ein abhängig gesteuertes Verschlußorgan vorgesehen ist, dadurch gekennzeichnet,
- daß eine Drehhülse (10) mit einer im Hülsenmantel angeordneten Durchbrechung als Steueröffnung (11) in der Ansaugleitung (Schwingrohr 6) im Bereich der Mündung (9) der anderen Ansaugleitung (Schwingrohr 7) als drehbewegliches Verschlußorgan angeordnet ist.
- wobei das Verschlußorgan bzw. die Drehhülse (10) aus der Ansaugleitung (Schwingrohr 6) längsdurchströmt ist.

2. Ansauganlage nach Anspruch 1. dadurch gekennzeichnet
- daß die Drehhülse (10) über ihren Außenumfang (13) gleitbeweglich gelagert ist, und
- über eine am Außenumfang angeordnete Einrichtung (Zahnkranz 14) in Antriebsverbindung mit einer abhängig steuerbaren Betätigungseinrichtung (Steuermotor mit Antriebsrad 16, Zahnstange 15) steht.

3. Ansauganlage nach Anspruch 2, dadurch gekennzeichnet, daß die Einrichtung (Zahnkranz 14) zur Antriebsverbindung und Mittel der Betätigungseinrichtung (Zahnstange 15, Antriebsrad 16 des Steuermotors) in einer mit der den Ansaugleitung(en) (Schwingrohre 6,7) luftführend in Verbindung stehenden Kammer (20) angeordnet sind, wobei
- eine mit dem Steuermotor verbundene Antriebswelle (17) eine Begrenzung der Kammer (20) unter Zwischenschaltung einer Wellendichtung durchsetzt.

4. Ansauganlage nach den Ansprüchen 1 - 3 für eine Brennkraftmaschine mit in Reihe angeordneten Zylindern, dadurch gekennzeichnet,
- daß die den Zylindern (5) zugeordneten Saugstutzen (12,37) und die den Saugstutzen jeweils zugeordneten Ansaugleitungen (Schwingrohre 6,7) miteinander über Flansche (18,19) verbindbar ausgebildet sind, und
- allen Saugstutzen sowie allen Ansaugleitungen jeweils ein gemeinsamer Flansch (18,19) zugeordnet ist, wobei
- die unter Zwischenlage einer Dichtung (21) verbindbaren Flansche (18,19) eine die Einrichtungen (Zahnkranz 14) und Mittel der Betätigungseinrichtung (Zahnstange 15, Antriebsrad 16) aufnehmende, gemeinsame Kammer (20) begrenzen.

5. Ausauganlage nach einem oder mehreren der Ansprüche 1 - 4, dadurch gekennzeichnet, daß die mit dem Verschlußorgan ausgerüstete Ansaugleitung (Schwingrohr 6) im flansch-bzw. stutzenseitigen Endbereich sich konisch erweiternd ausgebildet ist zur Aufnahme einer konisch gestalteten Drehhülse (10).

6. Ansauganlage nach den Ansprüchen 1 - 5, dadurch gekennzeichnet,
- daß jede Drehhülse (10) am im Durchmesser größerer Endbereich einen Zahnkranz (14) aufweist,
- der in eine in der Kammer (20) verschiebebeweglich angeordnete Zahnstange (15) eingreift,
- die über ein Antriebsrad (16) mit einem Stellmotor in Antriebsverbindung steht.

7. Ansauganlage nach den Ansprüchen 1 - 6, dadurch gekennzeichnet,
- daß die Ansaugleitung (Schwingrohr 6) stromauf der Drehhülse (10) mittels einer um die verlängerte Drehhülse-Achse (22) drehbeweglich angeordnete Steuerhülse (23) zur Laststeuerung steuerbar ist, wobei
- eine im Steuerhülsenmantel angeordnete Druchbrechung als Steueröffnung (24) dient.
- die in Umfangsrichtung um das Umfangsmaß der Steueröffnung (11) der Drehhülse (10) größer ist.

8. Ansauganlage nach Anspruch 7, dadurch gekennzeichnet,
- daß die Ansaugleitung (Schwingrohr 6) quer zur verlängerten Drehhülsen-Achse (22) gerichtet angeordnet ist, und
- eine zur Drehhülsen-Achse (22) koaxial angeordnete Aufnahme (25) für die Steuerhülse (23) aufweist, wobei
- ein am freien Ende der Aufnahme (25) anordbarer Verschlußpfropfen (26) in die Steuerhülse (23) ragt, und
- eine der Fortsetzung der Innenkontur der Ansaugleitung (Schwingrohr 6) dienende Begrenzung (27) aufweist.

9. Ansauganlage nach einem oder mehreren der Ansprüche 1 - 8, dadurch gekennzeichnet,
- daß die Steuerhülse (23) zylindrisch und einen den kleinen Durchmesser der konischen Drehhülse (10) angepaßten Durchmesser aufweist, und
- die Steuerhülse (23) an ihrem dem Verschlußpfropfen (26) zugewandten Ende über eine Einrichtung (Zahnkranz 28) in Antriebsverbindung mit einer Betätigungseinrichtung (Steuermotor mit Antriebsrad, Zahnstange 29) steht, und
- die Einrichtung sowie Mittel der Betätigungseinrichtung (Zahnstange 29, Antriebsrad) in einer mit der Ansaugleitung (Schwingrohre 6,7) luftführend verbundenen Kammer (30) angeordnet sind,
- die von einem für alle Aufnahmen (25) gemeinsamen Flansch (31) und einer für alle Verschlußpfropfen (26) gemeinsamen Verschlußplatte (32) begrenzt ist.

10. Ansauganlage nach den Anspruch 1 - 9, dadurch gekennzeichnet, daß Steuerhülse und Drehhülse gesondert angetrieben sind.

11. Ansauganlage nach den Ansprüchen 1 - 8, dadurch gekennzeichnet, daß die Steuerhülse (23) zum Antrieb über die Drehhülse (10) mit dieser in drehfester Verbindung steht.

12. Ansauganlage nach den Ansprüchen 1 - 9, dadurch gekennzeichnet, daß die Drehhülse (10) zum Antrieb über die Steuerhülse (23) mit dieser drehfest verbunden ist.

13. Ansauganlage nach den Ansprüchen 1 -6, dadurch gekennzeichnet, daß jeder Saugstutzen (37) stromab der Drehhülse (10) mit einer Drosselklappe (38) als Laststeuerorgan ausgerüstet ist.

14. Ansauganlage nach einem oder mehreren der Ansprüche 7 -12, dadurch gekennzeichnet,
- daß die Ansaugleitung (Schwingrohr 6) mit der Aufnahme (25) für die Steuerhülse (23) ein gesondertes Teil (33;34) bildet.

- das mit dem die Drehhülse (10) zur Steuerung der anderen Ansaugleitung (Schwingrohr 7) aufnehmenden Teil (35;36) verbindbar ist.

15. Ansauganlage nach einem oder mehreren der Ansprüche 1 -14,
- die ein Schwingrohr-System (3) mit einem Sammler (8) und diesen mit den Brennräumen (5) verbindenden Schwingrohren (6,7) umfaßt,
- wobei jedem Brennraum (5) mehrere Schwingrohre (6,7) zugeordnet sind,
- die mittels brennraumnahe angeordneter Verschlußorgane (10) steuerbar sind,
- die ferner ein Resonanzsystem (4) aus Resonanzrohren (42,43) und Resonanzbehältern (40,41) umfaßt, wobei
- die Kombination aus Schwingrohr-System (3) und Resonanzsystem (4) mit einem im Sammler (8) angeordneten, steuerbaren Absperrorgan (39) ausgerüstet ist, und
- das Sammler-Absperrorgan (39) und die Schwingrohr-Verschlußorgane (10) relativ zu einem unabhängig gesteuerten Laststeuerorgan (in 45) betriebspunktabhängig gleichsinnig oder wechselweise gegensinnig steuerbar sind (nach P 35 44 122.4) dadurch gekennzeichnet,
- daß die Verschlußorgane in den Schwingrohren (6) als Drehhülse (10) ausgebildet sind.

Fig.1

Fig.2

IV

IV

12

18

15

21

9

7

14

20

19

10

13

6

1

6

0 276 773

Fig. 3

Fig.4

0 276 773

14  20  10  35  22  33  23  25

26

27

24

6

9

12  18  15  7

1'

0 276 773

Fig.5

Fig. 6

Fig.7

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 577 646 (PEUGEOT-CITROEN) * Seite 1, Zeilen 1-34; Seite 2, Zeilen 1-17; Seite 3, Zeilen 1-9,25-33; Seite 4, Zeilen 1-34; Seite 5, Zeilen 1-26; Figuren 1-4 * | 1,2,6 | F 02 B 27/02 |
| Y | | 13,15 | |
| A | | 3 | |
| | --- | | |
| D,Y | DE-A-3 521 747 (HONDA) * Zusammenfassung; Figur 1 * | 13 | |
| | --- | | |
| P,D | DE-A-3 544 122 (BMW) | 15 | |
| Y | * Zusammenfassung * | | |
| | --- | | |
| A | PATENT ABSTRACTS OF JAPAN, Band 5, Nr. 193 (M-101)[865], 9. Dezember 1981; & JP-A-56 115 819 (NISSAN DIESEL KOGYO K.K.) 11-09-1981 * Zusammenfassung * | 1 | |
| | --- | | RECHERCHIERTE SACHGEBIETE (Int. Cl.4) |
| A | FR-A- 997 961 (BAZE) * Seite 1, linke Spalte, letzter Abschnitt; rechte Spalte, Abschnitt 5; Figur 2 * | 2 | F 02 B B 65 G |
| | --- | | |
| A | DE-A-1 600 782 (GENERAL DESCALING CO.) ----- | | |

Der vorliegende Recherchenbericht wurde für alle Patentansprüche erstellt

| Recherchenort | Abschlußdatum der Recherche | Prüfer |
|---|---|---|
| DEN HAAG | 08-04-1988 | JORIS J.C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes
    Dokument

EPO FORM 1503 03.82 (P0403)